# EUROPEAN PATENT SPECIFICATION

(11) **EP 1 394 019 B1**
(45) Date of publication and mention of the grant of the patent: **10.12.2008**
(21) Application number: 03019764.4
(22) Date of filing: 29.08.2003
(51) Int. Cl.: B62D 33/06, B62D 25/04, B62D 25/06

(54) **Cab structure for work vehicle**
Fahrerhausrahmen
Structure de cabine de véhicule

(30) Priority: 30.08.2002 JP 2002255003
(43) Date of publication of application: 03.03.2004
(73) Proprietor: KOMATSU LTD., Minato-ku, Tokyo (JP)
(72) Inventor: Itoh, Tatsushi c/o Komatsu Ltd., Hirakata-shi, Osaka (JP)
(74) Representative: Viering, Jentschura & Partner

(56) References cited:
- CH-A- 506 404
- DE-U- 29 608 575
- GB-A- 2 099 377
- PATENT ABSTRACTS OF JAPAN vol. 1999, no. 02, 26 February 1999 (1999-02-26) & JP 10 291485 A (MITSUBISHI AGRICULT MACH CO LTD), 4 November 1998 (1998-11-04)
- PATENT ABSTRACTS OF JAPAN vol. 2000, no. 23, 10 February 2001 (2001-02-10) -& JP 2001 171992 A (TOYOTA AUTOM LOOM WORKS LTD), 26 June 2001 (2001-06-26)
- PATENT ABSTRACTS OF JAPAN vol. 2003, no. 01, 14 January 2003 (2003-01-14) & JP 2002 249073 A (KUBOTA CORP), 3 September 2002 (2002-09-03)

## Description

### Technical Field

The present invention relates to operator's cab structures applicable to work vehicles classified into construction machines such as hydraulic excavators, farm machines such as tractors and other industrial machines.

### Background Art

There are various types of work vehicles such as construction machines, farm machines and material handling machines. For example, hydraulic excavators, which are a typical example of construction machines, are widely used in civil engineering work involving soil excavation, foundation work, demolition of architectural structure and the like. In such work, the operator operates the work implement, while visually checking the forward condition from the operator' s cab, particularly, through the front window. In spite of the fact that the work vehicle cab, in which the operator carries out operation while checking the forward condition, cannot be designed to have a wide space because of the vehicle' s structure including a work implement, a range of vision wide enough to provide good visibility to the operator during operation is required.

In the filed of work vehicles such as hydraulic excavators, many attempts have been made to increase the rigidity of the members constituting the framework of the cab in the light of safety to the operator and to promote rational utilization of pipe members of modified cross-section with a view to achieving improved functionality. According to Japanese Patent Publication *KOKAI* Gazette No. 5-256059 for example, a pipe member of modified cross-section is used for a front pillar and a supporting bracket for a half-lock rod of a side door is attached to the front pillar so that the side door can be held in a half-opened condition to get outside air.

Japanese Patent Publication *KOKAI* Gazette No. 2000-96618 discloses a framework member made from a pipe material to which functionality is added by a forming process in which a slide rail for opening and closing the front glass window of the operator's cab is formed by caving the opposed side faces of a front supporting column while making a part of the side faces folded.

Of the above known techniques, the means for adding functionality to a pipe member of modified cross-section used as a framework member for the operator's cab in Japanese Patent Publication *KOKAI* Gazette No. 5-256059 is designed as follows: A striker bracket is attached to the cab's frame while a door latch is attached to the door so that the door can be closed by the door latch and the striker; and the half-lock rod the base of which is pivotally supported by the striker bracket is pivoted into engagement with the door latch, so that the door can be held in a half-opened condition. The feature of this publication resides in that a member is welded to a specified position of a side face of another member and the desired function is effectuated by these members. In short, this publication is associated with only attachment of parts.

Japanese Patent Publication *KOKAI* Gazette No. 2000-96618 is directed to a pipe member serving as, a framework member and, more particularly, a front supporting column, which is processed by forming to make a groove serving as a guide rail or a rib for reinforcement. This technique is effective in improving functionality, but impractical unless it is applied to mass production, because the formation of such shapes involves pultrusion molding a plurality of times using different dies, which results in high production cost. In addition, products produced by such plastic forming tends to have unsatisfactory strength, depending on materials to be used. For forming a rectilinear member, a molded material may be simply cut into a desired size. On the other hand, when bending a cut material to be used as a part of a frame, the heat bending process and the cold drawing/bending process become necessary in which strains such as twisting occur, giving rise to a problem in the manufacture of the product. Therefore, use of the framework member for part of the structure may be possible, but there are many problems in constructing the frame of an operator's cab with the member having such complicated cross-sectional configuration.

A work vehicle cab structure according the preamble of claims 1 and 2 is disclosed in the Japanese application publication JP-A-2001 171992.

The invention aims to provide a work vehicle cab structure constituted by pipes, which does not use members having a complicated sectional structure but uses pipe members having a modified sectional structure and high workability, thereby achieving improved functionality as well as improved sectional strength for rational reinforcement.

### Disclosure of the Invention

The above object can be achieved by a work vehicle cab structure according to the claims 1 or 2.

With this arrangement, the sectional strength of the framework member can be increased and, at the same time, its cross-sectional area can be reduced, which leads to weight reduction and an improvement in the visibility from the operator's seat.

In addition, this arrangement has such an effect that the member attached to the pipe member facilitates attachment of a part to be later mounted such as window glass or a doorstop. When welding the functionality-providing member to the pipe member which constitutes the main framework, the processing is carried out in a condition unsusceptible to generation of strains by use of a simplified jig or the like required for the welding. The pipe member thus produced can be used as the basis for assembling all the parts to construct the entire frame. This is beneficial for the production of the framework because not only the investment in equipment such as a large-scaled jig required for the manufacture of the conventional frame but also the production cost can be saved.

In the invention, the pipe member may constitute a front supporting column, a ceiling longitudinal member and a rear supporting column which are integrally formed by bending and the member having a sectional shape that provides functionality may be welded to the pipe member in a specified region. With this arrangement, the right and left main frames which constitute the operator' s cab can be respectively formed from a single member, and the lower ends of the single frame member are connected by a front and rear-extending lower longitudinal member, thereby readily forming a side face structure of the operator's cab. Since the member having a sectional shape that provides functionality is integrally attached to the specified flat face of the pipe member serving as the main member, this attached member contributes to an increase in the strength of the framework. By connecting the right and left side face frame members with transverse connecting members, the framework of the operator' s can be readily formed. Therefore, the need for a conventionally used large-sized jig can be obviated, leading to simplification of the manufacturing process and cost reduction. This also has the advantage of reducing the weight of the framework and therefore the load of weight imposed on the vehicle.

In the invention, the pipe member may constitute a front supporting column and a ceiling longitudinal member which are integrally formed by bending and the member having a sectional shape that provides functionality is welded to the pipe member in a specified region. This arrangement differs from the foregoing arrangement in that the rear supporting column is formed from a member different from that of the front supporting column and the ceiling longitudinal part, but has substantially the same effect as the foregoing embodiment. Since the member having a sectional shape that provides functionality is integrally attached to the specified flat face of the pipe member serving as the main member, this attached member contributes to an increase in the strength of the framework. By connecting the right and left side face frame members with transverse connecting members, the framework of the operator' s cab can be readily formed. Therefore, the need for a conventionally used large-sized jig can be obviated, leading to simplification of the manufacturing process and cost reduction. This also has the advantage of reducing the weight of the framework and therefore the load of weight imposed on the vehicle.

In the invention, the pipe member preferably has a modified cross-section and a sash having a slide rail is integrally attached to the flat side face of the pipe member, the slide rail being the member having a sectional shape that provides functionality, the flat side face being positioned on a side where no curved face exists. In a conventional case, a sheet-like material for forming a pillar, for example, has a complicated structure because it is made by combining press-molded parts. In contrast with this, with the arrangement, a sash member and a pipe member to which the sash member is to be attached are respectively, independently formed into a desired outer shape and connected to each other by welding. In addition, a pipe member having a modified cross-section is used as a main component of the main framework. These features have the effect of enabling easy processing and enhancing strength reinforcement.

In the invention, the pipe member may have a modified cross-section and a member having a rectangular or channel-shaped cross-section is welded, as the member having a sectional shape that provides functionality, to the flat side face of the pipe member which is positioned on a side where no curved face exists, such that the member of rectangular or channel-shaped cross-section is a specified length set back from an outer face of the pipe member of modified cross-section, thereby forming a stepped portion defined by an outer face of the attached member and the mounting face of the pipe member to accommodate another member mounted thereon. With this arrangement, the flat face of the modified cross-sectional structure can be effectively utilized to facilitate the attachment of the member of rectangular or channel-shaped cross-section, while forming a stepped portion as a mounting position for another member. In addition, the effect of increasing sectional strength can be achieved by use of the pipe member of modified cross-section and the member to be attached thereto.

In the invention, a middle supporting column may be provided for connecting the ceiling longitudinal member of the pipe member and a bottom longitudinal member to each other, and a member having a rectangular cross-section that provides functionality may be attached to the middle supporting column so as to be a specified length set back from an outer face of the middle supporting column, thereby forming a stepped portion defined by an outer face of the attached member and the mounting face of the middle supporting column to accommodate another member mounted thereon. With this arrangement, the flat face of the middle supporting column can be effectively utilized to facilitate the attachment of the member of rectangular cross-section, while forming a stepped portion as a mounting position for another member. In addition, the effect of increasing sectional strength can be achieved by use of the middle supporting column and the member to be attached thereto.

### Brief Description of the Drawings

Figure 1 is a perspective view showing a frame structure of an operator's cab installed in a work vehicle according to an embodiment of the invention.
Figure 2 is a perspective view showing a main framework forming member (side member) which constitutes a side face of a cab's frame.
Figure 3 is an enlarged sectional view taken along line A-A of Figure 2.
Figure 4(a) is an enlarged sectional view taken along line B-B of Figure 2 and Figure 4(b) is an enlarged sectional view of a modification of the member shown in Figure 4(a).
Figure 5 shows enlarged sectional views of a middle supporting column, wherein Figure 5(a) shows a pipe member having a modified cross-section whereas Figure 5(b) shows a combination of pipe members each having a rectangular cross-section.
Figure 6 is a perspective view showing another frame structure of an operator' s cab installed in a work vehicle according to an embodiment of the invention.
Figure 7 is a perspective view showing a main framework forming member (side member) which constitutes a side face of a cab's frame of another frame structure.

### Best Mode For Carrying out the Invention

Referring now to the accompanying drawings, work vehicle cab structures will be described according to preferred embodiments of the invention.

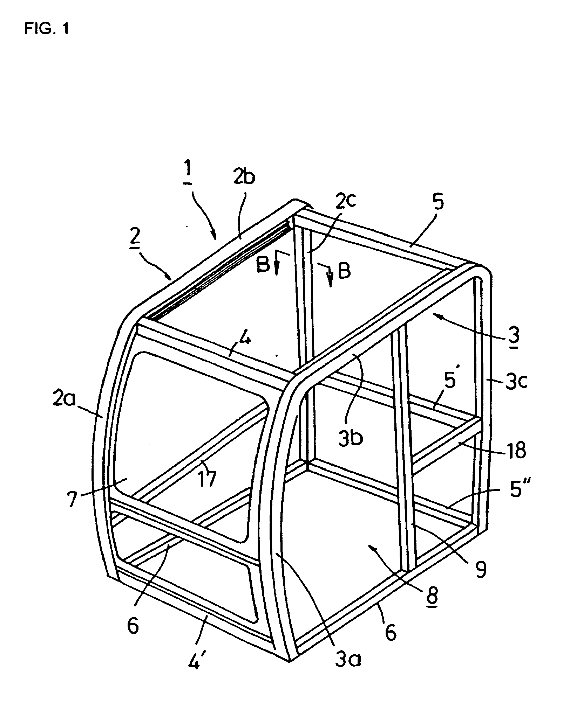

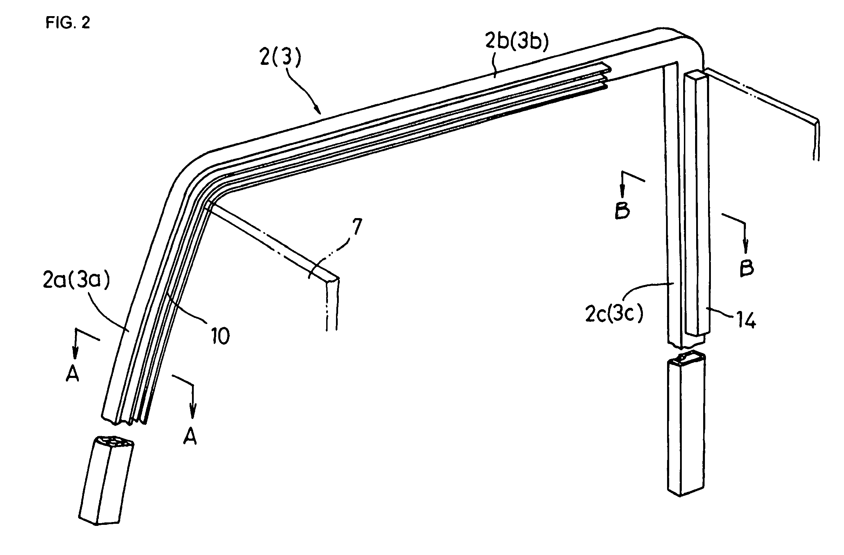

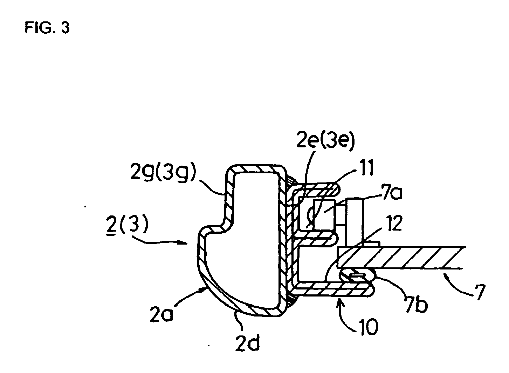

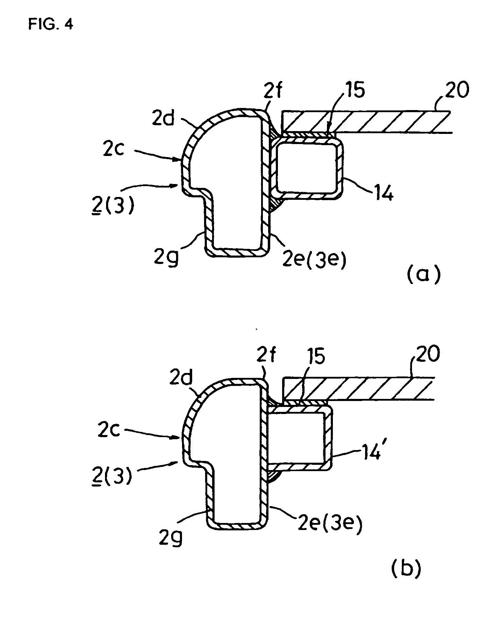

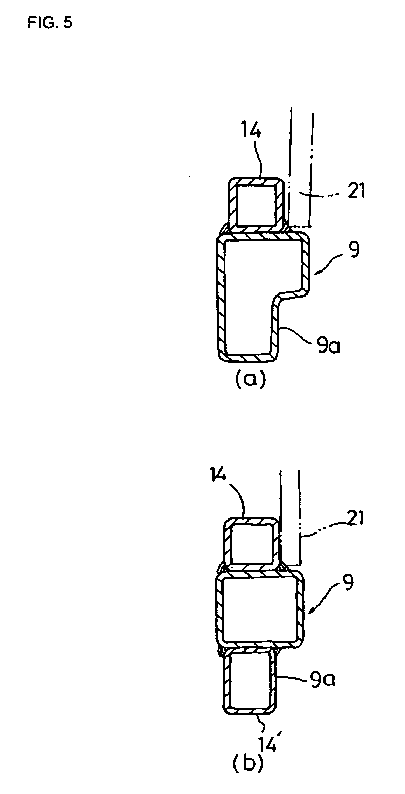

Figure 1 is a perspective view showing a frame structure of an operator's cab installed in a work vehicle according to an embodiment of the invention. Figure 2 is a perspective view showing a main framework forming member which constitutes a side face of a cab's frame. Figure 3 is an enlarged sectional view taken along line A-A of Figure 2. Figure 4(a) is an enlarged sectional view taken along line B-B of Figure 2 and Figure 4(b) is an enlarged sectional view of a modification of the member shown in Figure 4(a). Figures 5(a), 5(b) show enlarged sectional views of a middle supporting column.

The operator' s cab structure of the present embodiment is applied to a hydraulic excavator that is a typical construction machine.

A frame 1 constituting the operator's cab of this embodiment is formed by assembling pipe members. In the frame 1, a left (right) side member 2 (3), which is composed of a front supporting column 2a (3a), a longitudinal part 2b (3b) (hereinafter referred to as "ceiling longitudinal part 2b (3b)) at the ceiling section, and a rear supporting column 2c (3c), is formed by a single member which is bent into a shape having a desired size and desired profile. The left and right side members 2, 3 thus formed are connected to each other by means of a plurality of transverse connecting members 4, 4', 5, 5' , 5" of specified size, and the lower ends of each side member 2(3) are connected by a longitudinal member 6, whereby the contour of the cab is formed. It should be noted that the positional terms used herein ("right", "left", "longitudinal" and "transverse") are based on the orientations when the operator's cab is viewed from a front window 7.

In the frame 1 of the operator' s cab, the side members 2, 3 which constitute the left and right sides of the cab are respectively formed using a pipe member of modified cross-section as a main component as shown in Figures 2 and 3. Note that since the members 2, 3 are symmetrical, only one side member 2 will be described herein for simplicity. The pipe member is positioned such that its curved portion 2d corresponds to the ridge line of the operator' s cab, and a member 10 (hereinafter referred to as "guide rail") for forming a guide rail for the front window 7 is welded to an inwardly facing, flat side face portion 2e, extending in the region from the front supporting column 2a to the ceiling longitudinal part 2b. As shown in Figure 4(a), a small-sized pipe member 14 of rectangular cross-section is welded to the inwardly facing flat side face portion 2e within the rear supporting column portion 2c of the side member 2 such that the pipe member 14 is set back a specified length from an outer corner portion 2f which leads to the curved portion 2d of the main member, whereby a stepped portion 15 is formed. It should be noted that the main member (side member 2), the guide rail 10 and the pipe member 14 of rectangular cross-section are intermittently welded, thereby restricting generation of strains.

The guide rail 10 attached to the side member 2 has an E-shaped cross-sectional structure defined by (i) a guide groove 11 for a guide roller 7a which is provided for the front window 7 and (ii) a seal contact portion 12 which is formed in parallel with the guide groove 11 and with which a sealing member 7b attached to the front window 7 comes into contact, thereby exerting a sealing function. The way of producing the guide rail 10 may be selected from (i) forming of a thin pipe material, (ii) forming of a sheet-like material (not shown), and (iii) rolling of a sheet-like material (not shown), as far as the function described above can be obtained.

The small-sized pipe member 14 of rectangular cross-section attached to the rear supporting column 2c of the side member 2 may be replaced with a pipe member 14' having a ⊐-shaped (channel-shaped) cross-section such as shown in Figure 4(b). The set-back length defining the stepped portion 15 is determined such that the glass 20 of the rear window can be fitted in the space of the stepped portion 15. The window glass to be fitted in this space is bonded to the pipe member 14 or 14'.

A side glass (not shown) is bonded to the side member 2 at an outwardly facing stepped portion 2g.

The left and right side members 2, 3 having the above-described cross-sectional structure are symmetrically disposed with a specified spacing between and with their curved portions 2d facing outward. The side members 2, 3 are integrally connected by the transverse connecting members 4, 4' ; 5, 5' ; 5" at the upper and lower parts of the front supporting columns 2a, 3a and the rear supporting columns 2c, 3c. Disposed at the middle position of the right side member 3 having an entrance 8 is a middle supporting column 9 both ends of which are connected to the ceiling longitudinal part 3b of the right side member 3 and the bottom longitudinal member 6 respectively. As shown in Figure 5(a), the middle supporting column 9 has, at one side, a sealing face 9a with which the door (not shown) is brought into sealing contact when it is closed. At the opposite side of the middle supporting column 9, a small-sized pipe member 14 of rectangular cross-section is welded in the same fashion as in the rear supporting column 3c, so that a window glass 21 for the rear side section can be mounted on the pipe member 14. Similarly, a doorstop member is attached to a flat surface of the front supporting column 3a of the right side member 3, the flat surface being positioned on the side of the entrance 8. Alternatively, the stepped portion (corresponding to the stepped portion 2g of the left side member 2) of the right side member 3 may be formed as a doorstop face.

Apart from the above-described pipe member of modified cross-section, square and rectangular pipe members as shown in Figure 5(b) may be used for forming the middle supporting column 9. Specifically, a small-sized pipe member of square cross-section 14 is welded to a square pipe member such that the window glass 21 can be mounted at a side face of the square pipe member, whereas a rectangular pipe member 14' is welded to the other side of the square pipe member for forming the sealing face 9a with which the door is brought into sealing contact when it is closed.

The front supporting column 2a and rear supporting column 2c of the left side member 2 are connected, at their lower parts, by a window frame member 17 for supporting the lower edge of a side window, whereby the side window can be mounted. Similarly, the middle supporting column 9 and the rear supporting column 3c of the right side member 3 are connected, at their middle parts, by a window frame member 18, whereby a rear side window can be mounted.

In the frame 1 of the operator's cab of the present embodiment, the left and right side members 2, 3, which constitute the main part of the frame 1, are respectively formed by bending a single pipe member of modified cross-section into a desired shape and integrally attaching a functional member (the guide rail 10, a window frame (the small-sized pipe member 14) etc. ) to one side face of the pipe member. These side members 2, 3 are connected to each other by the transverse connecting members 4, 4' , 5, 5' , 5" at a plurality of positions which are spaced at desired intervals. Therefore, proper selection of shapes for the modified cross-sections of the pipe members and the attachment of the functional members make it possible to reduce the weight of the frame 1 while increasing the strength of the whole frame 1.

In addition, by making the outside dimension of the side members 2, 3 small on condition that the sectional strength is not spoiled, the area of the obstacles which cut off the forward view can be reduced, so that improved visibility can be achieved.

If the side members 2, 3 are precisely produced by eliminating bending strains, these members 2, 3 can be used as the basis for assembling the transverse connecting members 4 to 5", so that the manufacturing process can be rationalized and equipment investment can be saved, leading to significant cost reduction, since there is no need to use a large-sized jig such as conventionally required.

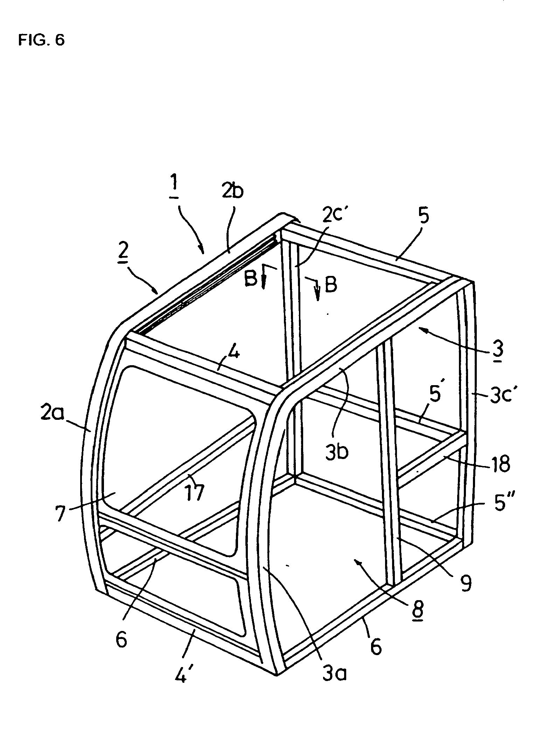

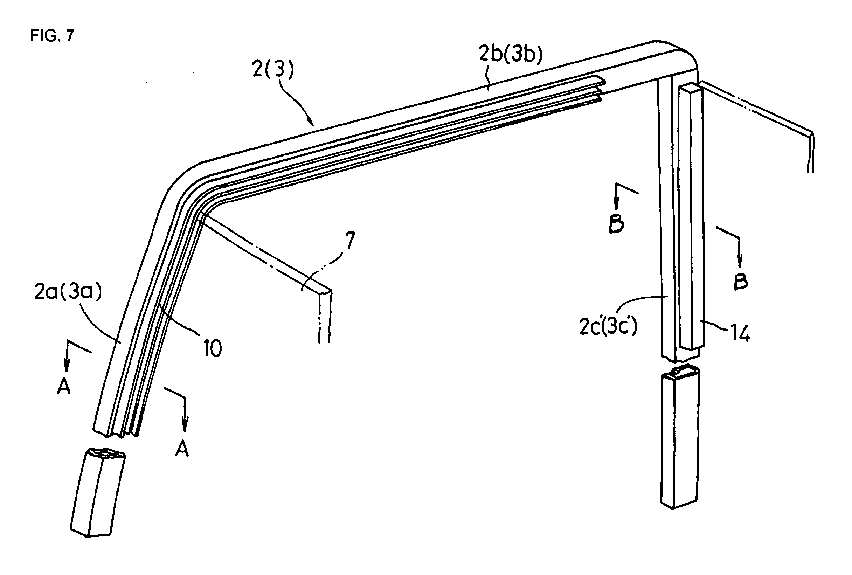

As shown in Figures 6 and 7, there may be used rear supporting columns 2c', 3c' which are formed from members different from those of the front supporting columns 2a, 3a and the ceiling longitudinal parts 2b, 3b (This embodiment is the same as the foregoing embodiment except that the rear supporting columns 2c' , 3c' are formed from different members). This arrangement differs from the foregoing embodiment in that the ceiling longitudinal parts 2b, 3b are connected, by welding, to the rear supporting columns 2c' , 3c' respectively to form the side members 2, 3, but has the same effects as those of the foregoing embodiment, that is, a weight reduction in the frame 1 and an increase in the strength of the whole frame 1.

## Claims

1. A work vehicle cab structure wherein a pipe member (2, 3) having one flat face at least at a side face thereof is used in a main framework and a functional member (10, 14, 14') having a sectional shape that provides functionality is attached to the flat face of the pipe member, wherein the pipe member (2, 3) constitutes a front supporting column (2a, 3a), a ceiling longitudinal member (2b, 3b) and a rear supporting column (2c, 3c) which are integrally formed by bending or wherein the pipe member (2, 3) constitutes a front supporting column (2a, 3a) and a ceiling longitudinal member (2b, 3b) which are integrally formed by bending and wherein the functional member (10) having a sectional shape that provides functionality is welded to the pipe member (2, 3) in a specified region,
**characterized in that** the pipe member (2, 3) has a modified cross-section and a sash having a slide rail (10) is integrally attached to the flat side face of the pipe member (2,3), the slide rail (10) being the functional member having a sectional shape that provides functionality, the flat side face being positioned on a side where no curved face exists.

2. A work vehicle cab structure wherein a pipe member (2, 3) having one flat face at least at a side face thereof is used in a main framework and a functional member (10, 14, 14') having a sectional shape that provides functionality is attached to the flat face of the pipe member, wherein the pipe member (2, 3) constitutes a front supporting column (2a, 3a), a ceiling longitudinal member (2b, 3b) and a rear supporting column (2c, 3c) which are integrally formed by bending or that the pipe member (2, 3) constitutes a front supporting column (2a, 3a) and a ceiling longitudinal member (2b, 3b) which are integrally formed by bending and wherein the functional member (14, 14') having a sectional shape that provides functionality is welded to the pipe member (2, 3) in a specified region,
**characterized in that** the pipe member (2, 3) has a modified cross-section and a member (14, 14') having a rectangular or channel-shaped cross-section is welded, as the functional member having a sectional shape that provides functionality, to the flat side face of the pipe member (2, 3) which is positioned on a side where no curved face exists, such that the functional member (14, 14') of rectangular or channel-shaped cross-section is a specified length set back from an outer face of the pipe member (2, 3) of modified cross-section, thereby forming a stepped portion defined by an outer face of the attached functional member (14, 14') and the mounting face of the pipe member (2, 3) to accommodate another member (20) mounted thereon.

3. The work vehicle cab structure according to claim 1 or 2, wherein a middle supporting column (9) is provided for connecting the ceiling longitudinal member (2b, 3b) of the pipe member (2, 3) and a bottom longitudinal member (6) to each other, and a functional member (14, 14') having a rectangular cross-section that provides functionality is attached to the middle supporting column (9) so as to be a specified length set back from an outer face of the middle supporting column (9), thereby forming a stepped portion defined by an outer face of the attached functional member (14, 14') and the mounting face of the middle supporting column (9) to accommodate another member (21) mounted thereon.

## Patentansprüche

1. Arbeitsfahrzeug-Kabinenstruktur, wobei ein Rohrelement (2, 3) mit zumindest einer flachen Fläche an zumindest einer seiner Seitenflächen in einem Hauptrahmen verwendet wird und ein Funktionselement (10, 14, 14') mit einer eine Funktionalität bereitstellenden Querschnittsform an der flachen Fläche des Rohrelements angebracht ist, wobei das Rohrelement (2, 3) eine vordere Stützsäule (2a, 3a), ein Deckenlängselement (2b, 3b) und eine hintere Stützsäule (2c, 3c) ausbildet, die durch Biegen integral geformt sind, oder wobei das Rohrelement (2, 3) eine vordere Stützsäule (2a, 3a) und ein Deckenlängselement (2b, 3b) ausbildet, die durch Biegen integral geformt sind, und wobei das Funktionselement (10) mit einer eine Funktionalität bereitstellenden Querschnittsform an dem Rohrelement (2, 3) in einem vorgegebenen Bereich angeschweißt ist, **dadurch gekennzeichnet, dass** das Rohrelement (2, 3) einen modifizierten Querschnitt aufweist und ein Fensterrahmen mit einer Gleitschiene (10) integral an der flachen Seitenfläche des Rohrelements (2, 3) angebracht ist, die Gleitschiene (10) das Funktionselement mit einer eine Funktionalität bereitstellenden Querschnittsform ist, und die flache Seitenfläche auf einer Seite positioniert ist, wo keine gekrümmte Fläche vorhanden ist.

2. Arbeitsfahrzeug-Kabinenstruktur, wobei ein Rohrelement (2, 3) mit einer flachen Fläche an zumindest einer seiner Seitenflächen in einem Hauptrahmen verwendet wird und ein Funktionselement (10, 14, 14') mit einer eine Funktionalität bereitstellenden Querschnittsform an der flachen Fläche des Rohrelements angebracht ist, wobei das Rohrelement (2, 3) eine vordere Stützsäule (2a, 3a), ein Deckenlängselement (2b, 3b) und eine hintere Stützsäule (2c, 3c) ausbildet, die durch Biegen integral geformt sind, oder wobei das Rohrelement (2, 3) eine vordere Stützsäule (2a, 3a) und ein Deckenlängselement (2b, 3b) ausbildet, die durch Biegen integral geformt sind, und wobei das Funktionselement (14, 14') mit einer eine Funktionalität bereitstellenden Querschnittsform an dem Rohrelement (2, 3) in einem vorgegebenen Bereich angeschweißt ist,
**dadurch gekennzeichnet, dass** das Rohrelement (2, 3) einen modifizierten Querschnitt aufweist und ein Element (14, 14') mit einem rechteckförmigen oder rohrförmigen Querschnitt als das Funktionselement mit einer eine Funktionalität bereitstellenden Querschnittsform an der flachen Seitenfläche des Rohrelements (2, 3) angeschweißt ist, die auf einer Seite positioniert ist, wo keine gekrümmte Fläche vorhanden ist, so dass das Funktionselement (14, 14') mit rechteckförmigem oder rohrförmigem Querschnitt von einer Außenfläche des Rohrelements (2, 3) mit modifiziertem Querschnitt um eine vorgegebene Länge zurückversetzt ist, so dass ein abgesetzter Abschnitt ausgebildet ist, der durch eine Außenfläche des angebrachten Funktionselements (14, 14') und der Montagefläche des Rohrelements (2, 3) definiert ist, um ein weiteres, daran montiertes Element (20) aufzunehmen.

3. Arbeitsfahrzeug-Kabinenstruktur nach Anspruch 1 oder 2, wobei eine mittlere Stützsäule (9) zur Verbindung des Dachlängselements (2b, 3b) des Rohrelements (2, 3) und eines Bodenlängselements (6) bereitgestellt ist, und ein eine Funktionalität bereitstellendes Funktionselement (14, 14') mit einem rechteckförmigen Querschnitt derart an der mittleren Stützsäule (9) angebracht ist, dass es um eine vorgegebene Länge von einer Außenfläche der mittleren Stützsäule (9) zurückversetzt ist, so dass ein abgesetzter Abschnitt ausgebildet ist, der durch eine Außenfläche des angebrachten Funktionselements (14, 14') und der Montagefläche der mittleren Stützsäule (9) definiert ist, um ein weiteres, daran montiertes Element (21) aufzunehmen.

## Revendications

1. Structure de cabine de véhicule de travail, dans laquelle un élément tubulaire (2, 3) ayant une face plate, au moins au niveau de sa face latérale, est utilisé dans un châssis principal et un élément fonctionnel (10, 14, 14') ayant une forme transversale qui fournit la fonctionnalité, est fixé à la face plate de l'élément tubulaire, dans laquelle l'élément tubulaire (2, 3) constitue une colonne de support avant (2a, 3a), un élément longitudinal de plafond (2b, 3b) et une colonne de support arrière (2c, 3c) qui sont formés de manière solidaire par cintrage ou dans laquelle l'élément tubulaire (2, 3) constitue une colonne de support avant (2a, 3a) et un élément longitudinal de plafond (2b, 3b) qui sont formés de manière solidaire par cintrage et dans laquelle l'élément fonctionnel (10) ayant une forme transversale qui fournit la fonctionnalité, est soudé sur l'élément tubulaire (2, 3) dans une région spécifiée,
**caractérisée en ce que** l'élément tubulaire (2, 3) a une section transversale modifiée et un cadre ayant un rail de coulissement (10) est fixé de manière solidaire à la face latérale plate de l'élément tubulaire (2, 3), le rail de coulissement (10) étant l'élément fonctionnel ayant une forme transversale qui fournit la fonctionnalité, la face latérale plate étant positionnée sur un côté où il n'existe pas de face incurvée.

2. Structure de cabine de véhicule de travail dans laquelle un élément tubulaire (2, 3) ayant une face plate au moins au niveau de sa face latérale est utilisé dans un châssis principal et un élément fonctionnel (10, 14, 14') ayant une forme transversale qui fournit la fonctionnalité, est fixé à la face plate de l'élément tubulaire, dans laquelle l'élément tubulaire (2, 3) constitue une colonne de support avant ( 2a, 3a), un élément longitudinal de plafond (2b, 3b) et une colonne de support arrière (2c, 3c) qui sont formés de manière solidaire par cintrage ou que l'élément tubulaire (2, 3) constitue une colonne de support avant (2a, 3a) et un élément longitudinal de plafond (2b, 3b) qui sont formés de manière solidaire par cintrage et dans laquelle l'élément fonctionnel (14, 14') ayant une forme transversale qui fournit la fonctionnalité est soudé à l'élément tubulaire (2, 3) dans une région spécifiée,
**caractérisée en ce que** l'élément tubulaire (2, 3) a une section transversale modifiée et un élément (14, 14') ayant une section transversale rectangulaire ou en forme de canal est soudé, étant donné que l'élément fonctionnel ayant une forme transversale en tant qu'élément fonctionnel ayant une forme transversale qui fournit la fonctionnalité, sur la face latérale plate de l'élément tubulaire (2, 3) qui est positionné sur un côté où aucune face incurvée n'existe, de sorte que l'élément fonctionnel (14, 14') de la section transversale rectangulaire ou en forme de canal est une longueur spécifiée en retrait d'une face externe de l'élément tubulaire (2, 3) de section transversale modifiée, formant ainsi une partie étagée définie par une face externe de l'élément fonctionnel fixé (14, 14') et la face de montage de l'élément tubulaire (2, 3) pour loger un autre élément (20) monté sur celui-ci.

3. Structure de cabine de véhicule de travail selon la revendication 1 ou 2, dans laquelle une colonne de support centrale (9) est prévue pour raccorder l'élément longitudinal de plafond (2b, 3b) de l'élément tubulaire (2, 3) et un élément longitudinal inférieur (6) entre eux, et un élément fonctionnel (14, 14') ayant une section transversale rectangulaire qui fournit la fonctionnalité, est fixé à la colonne de support centrale (9) afin d'être une longueur spécifiée en retrait d'une face externe de la colonne de support centrale (9), formant ainsi une partie étagée définie par une face externe de l'élément fonctionnel (14, 14') et la face de montage de la colonne de support centrale (9) pour loger un autre élément (21) monté sur celle-ci.
